**Europäisches Patentamt**

**European Patent Office**

**Office européen des brevets**

(11) Publication number: **0 096 259**
**A2**

## (12) EUROPEAN PATENT APPLICATION

(21) Application number: **83104969.7**

(22) Date of filing: **19.05.83**

(51) Int. Cl.³: **B 60 T 8/26**

(30) Priority: **08.06.82 JP 97966/82**

(43) Date of publication of application:
**21.12.83 Bulletin 83/51**

(84) Designated Contracting States:
**DE FR GB**

(71) Applicant: **NISSAN MOTOR COMPANY, LIMITED**
No.2, Takara-cho, Kanagawa-ku
Yokohama City(JP)

(72) Inventor: **Kubota, Hitoshi**
No. 107-2, Mitake
Minamiashigara City(JP)

(74) Representative: **Patentanwälte Grünecker, Dr.
Kinkeldey, Dr. Stockmair, Dr. Schumann, Jakob, Dr.
Bezold, Meister, Hilgers, Dr. Meyer-Plath**
Maximilianstrasse 58
D-8000 München 22(DE)

(54) **Fluid pressure control valve of deceleration sensing type.**

(57) A fluid pressure control valve assembly to be used in a vehicular hydraulic brake system comprises a control valve, a deceleration sensing valve and a bypass valve. The control valve, which may be a proportioning valve or a limiting valve, reduces an output fluid pressure (, that is, the hydraulic brake pressure to the rear brakes) as compared to an input fluid pressure (, that is, the brake pressure to the front brakes) when the input fluid pressure increases beyond a predetermined critical value. The deceleration sensing valve changes the critical value of the control valve in accordance with the weight of the vehicle. When the input fluid pressure increases beyond a predetermined value which is generally greater than the critical value of the control valve, the bypass valve controls the output fluid pressure in place of the control valve. In this case, the bypass valve brings the output fluid pressure closer to the input fluid pressure so as to prevent the brake pressure to the rear brakes from being reduced too much by the control valve especially when the vehicle is loaded and the brakes are applied hard.

./...

FIG.1

ᴛꜰ 𝘐ᴄ𝘵𝘴 163-82
PATENTANWÄLTE
GRÜNECKER DR KINKELDEY DR STOCKMAIR
DR. SCHUMANN · JAKOB DR GERALD MEISTER
HILGERS DR MEYER PLATH
0096259

-1-

# FLUID PRESSURE CONTROL VALVE OF DECELERATION SENSING TYPE

## BACKGROUND OF THE INVENTION

The present invention relates to a deceleration sensing type fluid pressure control valve which is often referred to as a non-linkage type load sensing valve.

Such a fluid pressure control valve is generally used in a hydraulic brake system of an automobile. In a hydraulic brake system, braking forces are applied to the front wheels and the rear wheels at the same time. If the rear wheels lock before the front wheels, it causes rear end skid. This is more dangerous than when the front wheels lock first. During braking, some of the vehicle weight is transferred from the rear wheels to the front wheels. Accordingly, the rear wheels tend to lock or stop rotating earlier than the front wheels because of reduced friction between a tire and a road surface. In the light of this tendency and the danger of rear end skid, there is provided, in the rear brake system, the above-mentioned fluid pressure control valve for restraining or moderating an increase of the rear wheel cylinder fluid pressure as compared to an increase of the front wheel cylinder fluid pressure (master cylinder fluid pressure).

Known types of the fluid pressure control valve are a proportioning valve and a limiting valve, which are designed to move in response to an input fluid pressure (master cylinder fluid pressure) against the force of a spring, and to supply an output fluid pressure (rear wheel cylinder fluid pressure) by restricting the input pressure. However, these fluid pressure control valves start to restrain an increase of the rear wheel cylinder fluid pressure at a fixed fluid pressure point called a split point, so that the braking force distribution characteristic is also fixed irrespective of the weight of the vehicle. In general, the ideal braking force distribution characteristic which enables the front wheels and the rear wheels to lock at the same time, is variable depending upon the vehicle weight. In order to approximate the function of the control valve to the ideal braking force distribution characteristic, therefore, it is necessary to shift the split point to a higher pressure level as the vehicle weight increases. The control valves of the these types can not do this, and accordingly, they are not suitable to trucks or other vehicle whose weight changes greatly depending upon whether the vehicle is loaded or empty.

There has been proposed and is used the deceleration sensitive type fluid pressure control valve which provides

-3-

a variable split point and a variable braking force distribution characteristic. The fluid pressure control valve of this type has additionally a deceleration sensitive valve (G valve). When the brakes are applied and the deceleration of a predetermined magnitude occurs, the deceleration sensitive valve is actuated to seal the input fluid pressure existing at that time, in a sealing chamber. The value of the thus sealed fluid pressure is dependent on the vehicle weight, and increases as the vehicle weight increases. The deceleration sensitive valve changes the split point (which is determined by the force of a spring in the control valve as explained later) by exerting the sealed fluid pressure on the spring of the control valve. Thus, the split point is raised as the vehicle weight increases.

However, such a deceleration sensitive type fluid pressure control valve is still unsatisfactory in that it tends to reduce the rear wheel cylinder fluid pressure too much when the vehicle weight is heavy, as explained later.

SUMMARY OF THE INVENTION

It is an object of the present invention to provide the deceleration sensitive type fluid pressure control valve which, when used in a vehicular hydraulic brake system, can reduce the hydraulic brake pressure to the rear brakes as compared to the brake pressure to the front brakes to prevent the rear wheels from locking earlier than the front wheels, and which, at the same time, can prevent the brake pressure to the rear brakes from becoming too much lower than the brake pressure to the front brakes especially when the vehicle is loaded and braked hard.

According to the present invention, the fluid pressure control valve assembly comprises control valve means, deceleration sensing valve means and bypass valve means. The control valve means comprises an inlet port through which an input fluid pressure is taken in, an output port through which an output fluid pressure is put out, a spring, and a control valve member which is loaded by the spring and is movable against the spring in response to the input fluid pressure. When the input fluid pressure is equal to or higher than a first predetermined value which is determined by the spring, the control valve member is in its operative position in which the control valve member controls the value of the output fluid pressure so that the output fluid pressure is equal to or lower than the input fluid pressure. The deceleration sensing valve means comprises a fluid chamber normally communicating with the inlet port of the control valve means by a fluid passage, a deceleration sensitive member for sealing the fluid chamber when the deceleration of the vehicle reaches to a predetermined magnitude, and a piston whose axial position is determined by the fluid pressure in the fluid chamber and which is capable of compressing the spring of the control valve means to change the first predetermined value in accordance with the fluid pressure in the fluid chamber. The bypass valve means comprises a bypass valve member which is movable in response to the input fluid pressure and is held, when the input fluid pressure is equal to or higher than a second predetermined value, in an operative state in which the bypass valve member controls the output fluid pressure in place of the control valve means.

Preferably, when the input fluid pressure is lower than the first predetermined value, the control valve member is in an inoperative position in which the control valve member allows the fluid to pass freely through the control valve means and keeps the output fluid pressure equal to the input fluid pressure. In addition, the bypass valve means further comprises a spring for urging the bypass valve member and determining the second predetermined value. The bypass valve member when in its operative state allows the fluid to bypass the control valve means in a controlled manner while the bypass valve member is held in an inoperative state in which the bypass member prevents the fluid from bypassing the control valve means and has no influence on the control of the control valve means when the input fluid pressure is lower than the second predetermined value.

Preferably, the second predetermined value is greater than the first predetermined value at least on the condition that the weight of the vehicle is constant. The fluid pressure control valve assembly increases the output fluid pressure, as the input fluid pressure increases, so that the output fluid pressure is a monotone nondecreasing function of the input fluid pressure. The rate of increase of the output fluid pressure with respect to the input fluid pressure is equal to a first rate when the input fluid pressure is below the first predetermined value, a second rate when the input fluid pressure is between the first predetermined value and the second predetermined value and a third rate when the input fluid pressure is beyond the second predetermined value. The second rate is smaller than the first rate and the third rate is greater than the second rate

## BRIEF DESCRIPTION OF THE DRAWINGS

Fig. 1 is a longitudinal sectional side elevation showing a first embodiment of the fluid pressure control valve according to the present invention;

Fig. 2 is a partial sectional view showing a second embodiment;

Fig. 3 is a partial sectional view showing a third embodiment;

Figs. 4 to 6 are diagrams showing the functions of the fluid pressure control valve assemblies according to the present invention; and

Fig. 7 is a diagram showing ideal braking force distribution characteristic curves.

## DETAILED DESCRIPTION OF THE INVENTION

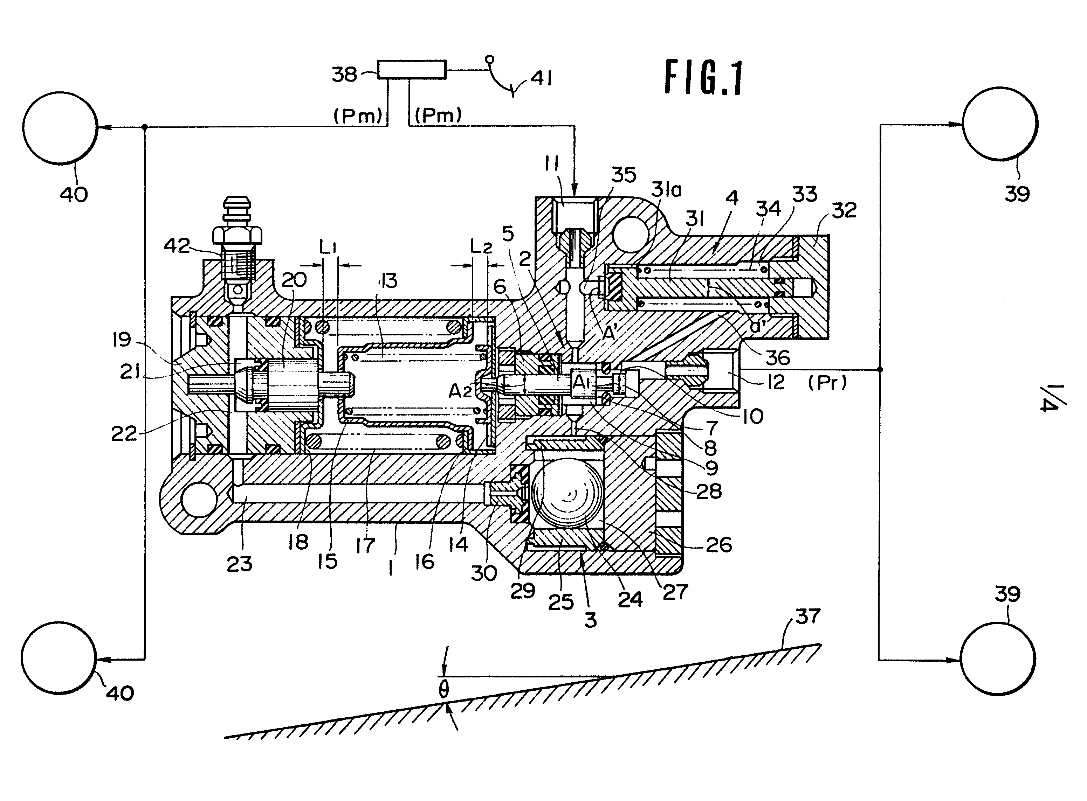

Fig. 1 shows one embodiment of the deceleration sensitive type fluid pressure control valve assembly according to the present invention. In a valve casing 1, there are provided a fluid pressure control valve 2 (which is a proportioning valve in this example), a deceleration sensing valve (G valve) 3, and a bypass valve 4.

The pressure control valve 2 has a plunger 5 which is slidably guided by a retainer 6 within the valve casing 1. A valve element 7 is integral with the plunger 5. A valve seat 8 for the valve element 7 is attached within the valve casing, and there are formed a first chamber 9 on one side of the valve seat 8 and a second chamber 10 on the other side of the valve seat 8 within the valve casing 1. The valve casing 1 is further formed with a fluid inlet port 11 leading into the first chamber 9 and a fluid outlet port 12 leading into the second chamber 10.

A spring 13 disposed in the valve casing 1 urges the plunger 5 through a first spring seat 14 into an open position where the valve element 7 is away from the valve seat 8 as shown in Fig. 1. The end of the spring 13 remote from the plunger 5 is seated on a second spring seat 15. The second spring seat 15 has one end which extends toward the valve element 7 and is engaged with a third spring seat 16. The third spring seat 16 is urged and held in its limit position shown in Fig. 1 by a second spring 17. The end of the second spring 17 remote from the third spring seat 16 is seated through a fourth spring seat 18 on a plug 19 closing an opening of the valve casing 1.

The plug 19 contains a slidable piston 20, and is formed with a sealing chamber 21. The fourth spring seat 18 is seated on a projecting portion of the piston 20. The projecting portion of the piston 20 is loosely inserted in an opening of the second spring seat 15.

Thus, a dummy stroke $L_1$ is formed between the fourth spring seat 18 and the second spring seat 15, and an effective stroke $L_2$ is formed between the first spring seat 14 and the second spring seat 15, as shown in Fig. 1. The plug 19 is further formed with a radially extending hole 22 which passes through the sealing chamber 21. One end of the radially extending hole 22 is connected to an air vent valve 42 disposed in the valve casing 1. The other end of the radially extending hole 22 is connected to a passage 23 formed in the valve casing 1.

The deceleration sensing valve 3 disposed in the valve casing 1 has a G ball 24 which is retained by holder 25 in such a manner that the G ball 24 is movable in axial direction of the holder 25. A bore of the valve casing 1 containing the G ball 24 is closed by a plug 26, and a ball chamber 27 is formed in the valve casing 1. The ball chamber 27 communicates with the first chamber 9 by an orifice 28 provided in the valve casing 1 and an inclined hole 29 formed in the holder 25. The ball chamber 27 further communicates with the sealing chamber 21 through an opening of a ball seat 30 by the passage 23.

The bypass valve 4 has a piston-like valve element 31 having a large diameter portion and a small diameter portion. The large diameter portion of the valve element 31 is slidably received in a bore of the valve casing 1, and the small diameter portion is slidably received in a bore of a plug 32. Thus, a bypass chamber 33 is formed in the valve casing 1. A spring 34 is disposed in the bypass chamber 33 and compressed between the valve element 31 and the plug 32 so that the valve element 31 is urged into its closed position as shown in Fig. 1. The end of the valve element 31 remote from the plug 32 faces a hole 35 which communicates with the inlet port 11. The bypass chamber 33 communicates with the second chamber 10 by a passage 36. The large diameter portion of the valve element 31 is formed with an axially extending groove 31a on the outer circumferential surface.

This deceleration sensitive type fluid pressure control valve assembly is mounted on the vehicle body with its lefthand end, as viewed in Fig. 1, oriented toward the front of the vehicle and its right-hand end oriented toward the rear of the vehicle, and inclined at an angle of θ with respect to the horizontal 37 in order that the G ball 24 is normally held by gravity force in its open position where the G ball 24 is in contact with the plug 26 and away from the ball seat 30 opening the hole of the ball seat 30. The inlet port 11 of the control valve is connected with one outlet port of the tandem master cylinder 38 operated by a brake pedal 41. The outlet port 12 of the control valve is connected with rear wheel cylinders 39. The other outlet port of the tandem master cylinder 38 is connected with front wheel cylinders 40.

The thus constructed fluid pressure control valve assembly of the present invention is operated as follows; Fig. 1 shows the control valve assembly in its inoperative state. If the brake pedal 41 is depressed, the master cylinder 38 is brought into operation and transmits the same fluid pressure referred to as master cylinder fluid pressure Pm from the both outlet ports at the same time. The master cylinder fluid pressure Pm from one outlet port is directly supplied to the front wheel cylinders 40, so that the front wheel cylinder fluid pressure is always equal to the master cylinder pressure. At first, the master cylinder fluid pressure supplied from the other outlet port of the tandem master cylinder 38 is also directly supplied to the rear wheel cylinders 39 by way of the inlet port 11 of the control valve, the first chamber 9, an opening between the valve element 7 and the valve seat 8, the second chamber 10 and the outlet port 12. Therefore, the rear wheel cylinder fluid pressure Pr is kept equal to the master cylinder fluid pressure Pm and increases equally with the master cylinder fluid pressure Pm, as shown by a straight line segment a-b in Fig. 7.

In this case, the balance of forces acting on the plunger 5 is expressed by $Pm \cdot A_2 = F$, where $A_2$ is a cross sectional area of the bore of the retainer 6, and F is the force of the spring 13. As the master cylinder fluid pressure Pm increases with depression of the brake pedal 4, the value of the left side member of the above equation increases, and the plunger 5 is moved to the left in Fig. 1 against the spring 13 until finally the valve element 7 is seated on the valve seat 8 and shuts off the fluid pressure supply line to the rear wheel cylinders 39. From this moment, the control valve 2 restrains an increase of the rear wheel cylinder fluid pressure Pr. The fluid pressure at this moment, which is referred to as a critical fluid pressure $P_{s1}$ (vid. Fig. 7), is obtained by substituting Ps1 into Pm in the above equation, as follows:

$$P_{s1} = \frac{F}{A_2} \quad \ldots\ldots\ldots\ldots\ldots\ldots\ldots\ldots\ldots \quad (1)$$

In the case where the control valve is in its closed state, the master cylinder fluid pressure Pm in the first chamber 9 pushes the plunger 5 to the right in Fig. 1 with a force of $Pm(A_1-A_2)$, where A1

is the cross sectional area of the valve element 7 (provided that $A_1 > A_2$). This rightward force opposes a leftward force of $PrA_1$ applied on the plunger 5 by the rear wheel fluid pressure Pr in the second chamber. If the brake pedal 41 is further depressed to further increase the master cylinder fluid pressure Pm, the force of $Pm(A_1-A_2)$ caused by the master cylinder fluid pressure Pm and the force F of the spring 13 cause the plunger 5 to move rightwards to open the control valve 2 again. In its open position, the control valve 2 allows the master cylinder pressure Pm into the rear brake system to increase the rear wheel cylinder fluid pressure Pr. However, the master cylinder fluid pressure Pm begins pushing the plunger leftwards as soon as the control valve 2 is opened, and therefore, the control valve 2 is immediately closed. Thus, the plunger 5 of the control valve 2 repeatedly moves back and forth, and allows the rear wheel fluid pressure Pr to increase with an increase of the master cylinder fluid pressure Pm at a controlled rate more gradual than the master cylinder fluid pressure. As evident from the preceding explanation, when the master cylinder fluid pressure Pm is greater than the critical pressure Ps1, the balance of the forces acting on the plunger 5 is expressed by:

$$PmA_2 + PrA_1 = F + PmA_1 \quad \ldots\ldots\ldots\ldots\ldots \quad (2)$$

From this equation, the rear wheel fluid pressure Pr is given by:

$$Pr = \frac{A_1 - A_2}{A_1} Pm + \frac{F}{A_1} \quad \ldots\ldots\ldots\ldots\ldots \quad (3)$$

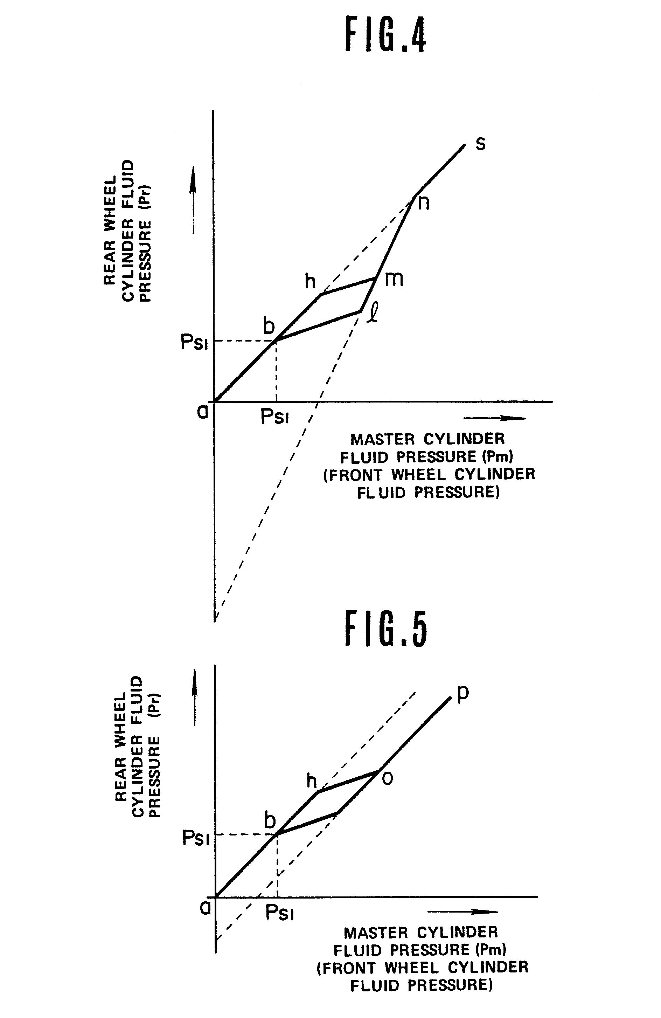

Thus, the rear wheel cylinder fluid pressure Pr increases at a gradient equal to one until a split point b of Figs. 4 and 7, is reached, and after that, the pressure Pr increases at a gradient of $\frac{A_1 - A_2}{A_1}$ which is smaller than one, as shown by a straight line segment b-ℓ of Fig. 4 and a straight line segment b-c of Fig. 7. In this way, the rear wheel cylinder fluid pressure Pr is reduced as compared to the master cylinder fluid pressure Pm.

The master cylinder fluid pressure Pm supplied to the inlet port 11 is introduced to the sealing chamber 21 by way of the fluid chamber 9, the orifice 28, the inclined hole 28, the ball chamber 27, the opening of the ball seat 30, the passage 23, and the radial hole 22. When the deceleration of the vehicle exceeds a predetermined value, the deceleration causes the G ball 24 to move leftwards in Fig. 1 against gravity force and to close the opening of the ball seat 30. The deceleration sensing valve 3, thus, shuts off the fluid pressure supply line to the sealing chamber 21, and seals the master cylinder fluid pressure at that time in the sealing chamber 21. The fluid pressure thus sealed in the sealing chamber 21 is maintained, irrespective of a further increase of the master cylinder fluid pressure Pm, at a value which the master cylinder fluid pressure Pm has when the deceleration of the predetermined magnitude occurs.

The value of the fluid pressure thus sealed in the sealing chamber 21 is low when the vehicle weight is low, and high when the vehicle is loaded and heavy, because the heavier the vehicle, the greater input effort applied on the brake pedal 41 and the higher master cylinder fluid pressure Pm are required to obtain the deceleration of the predetermined magnitude. When the vehicle weight is light, the sealed pressure is not high enough to move the piston 20 beyond the dummy stroke $L_1$ and to increase the force F of the spring 13. Accordingly, the control valve 2 controlls the rear wheel cylinder fluid pressure Pr so as to increase it along the line a-b-$\ell$ in Fig. 4 which is approximate to the ideal brake force distribution characteristic, and thereby prevents the rear wheels from locking prior to the front wheel.

When the vehicle is loaded and its weight is increased, the deceleration sensing valve 3 seals the enhanced fluid pressure in the sealing chamber 21. The high fluid pressure sealed in the sealing chamber 21 moves the piston 20 beyond the dummy stroke $L_1$ into the range of the effective stroke $L_2$, and increases the force F of the spring 13. As the force F of the spring 13 increases, the critical fluid pressure given by the equation (1) is increased from $P_{s1}$, the value for the empty vehicle, to a point h of Fig. 4 corresponding to a point h of Fig. 7. From the point h, the rear wheel cylinder fluid pressure Pr obtained by the equation (3) increases at a gradient of $\dfrac{A_1 - A_2}{A_1}$ equal to the gradient of a line segment h-i of Fig. 7, as shown by a line segment h-m in Fig. 4. Thus, the rear wheel cylinder fluid pressure Pr is reduced as compared to the master cylinder fluid pressure Pm.

In this control valve, there is provided the orifice 28 for the following reason. When the brakes are applied hard in an empty condition (the vehicle weight is light) by depressing the brake pedal rapidly, the deceleration tends to occur with some delay with respect to the increasing speed of the input fluid pressure (master cylinder fluid pressure), so that the response of the G valve which is actuated by deceleration is delayed. Besides, a rapid brake fluid movement exerts dynamic pressure on the G ball 24, so that the movement of the G ball 24 is influenced by factors other than deceleration. Therefore, the fluid pressure sealed in the sealing chamber 21 does not correspond correctly to the vehicle weight, but it tends to be too high. If there were not the orifice 28, such a high fluid pressure sealed in the sealing chamber 21 would cause the piston 20 to move rightwards, in Fig. 1, beyond the dummy stroke L1 into the effective stroke L2, and therefore, would increase the critical fluid pressure from the point b to a point f in Fig. 7, and shift the braking force distribution characteristic from the line a-b-c approximate to the ideal curve j to a line a-f-g. The orifice 28 disposed in the fluid pressure supply line to the sealing chamber 21 prevents the fluid pressure sealed in the sealing chamber 21 from becoming too high by restricting the fluid passage to the sealing chamber 21.

The orifice 28, however, prevents an increase of the fluid pressure in the sealing chamber 21 even during hard braking in a loaded condition (the vehicle weight is heavy), whereas the deceleration occurs without delay with respect to the increasing speed of the input fluid pressure (master cylinder fluid pressure) in this condition. Accordingly, the fluid pressure in the sealing chamber 21 increases with a delay with respect to occurrence of deceleration, and the G valve 3 is closed by the deceleration before the fluid pressure in the sealing chamber 21 becomes high enough. In this case, the fluid pressure sealed in the sealing chamber 21 is too low to move the piston 20 and to compress the spring 13 to a required extent, so that the critical pressure is lowered from a desired point d to the point h, and the braking force distribution characteristic of the loaded condition is shifted from the line a-d-e approximate to the ideal characteristic curve k to the line a-h-i.

The braking behavior according to the characteristic line a-h-i can prevent the rear wheels from locking ahead of the front wheels but it locks the front wheel rotation too much earlier than the rear wheels. As evident from the comparison between the line a-h-i and the ideal curve k, the front wheel cylinder fluid pressure become too much higher than the rear wheel cylinder fluid pressure. Too early locking of the front wheel rotation is dagerous, though it may not so dagerous as first locking of the rear wheel rotation, because vehicle directional control is lost.

According to the present invention, the bypass valve 4 functions for preventing the front wheel cylinder fluid pressure from becoming too much higher than the rear wheel cylinder fluid pressure. The valve element 31 of the bypass valve 4 is held in its closed position shown in Fig. 1 as long as the master cylinder fluid pressure Pm is equal to or lower than a predetermined value which is determined by a set load F' of the spring 34. In this case, the fluid pressure control is performed only by the control valve 2 as described hereinbefore. When the master cylinder fluid pressure Pm exceeds the above-mentioned predetermined value, the master cylinder fluid pressure Pm pushes the valve element 31 rightwards in Fig. 1 against the force of the spring 34 to open the bypass valve 4. In this state, the bypass valve 4 allows the master cylinder fluid pressure Pm coming from the inlet port 11 to bypass the control valve 2 and to reach the rear wheel cylinders 39 by way of the hole 35, the axial groove 31a, the bypass chamber 33, the passage 36 and the outlet port 12. By so doing, the bypass valve 4 performs a fluid pressure control in a different manner from the control of the control valve 2.

The master cylinder fluid pressure Pm acts on an effective area A' of the valve element 31 and applies a rightward force of Pm·A' on the valve element 31. This rightward force is balanced by a leftward force of Pr(A'-a') which is caused by the rear wheel cylinder fluid pressure Pr acting on the area remaining after the subtraction of the cross sectional area a' of the small diameter portion of the valve element 31 from the effective area A', and a leftward force of F' caused by the spring 34. Thus, the equation of the balance is expressed by

$$Pm \cdot A' = Pr(A'-a') + F'$$

From this equation, the rear wheel cylinder fluid pressure Pr is given by

$$Pr = \frac{A'}{A' - a'} \cdot Pm - \frac{F'}{A' - a'} \quad \cdots\cdots\cdots \quad (4)$$

In the range where the master cylinder is equal to or greater than the predetermined value determined by the spring 34, therefore, the rear wheel cylinder fluid pressure Pr is so controlled as to increase in accordance with the equation (4), as shown by a line segment m-n of Fig. 4. After the rear wheel cylinder fluid pressure Pr becomes equal to the front wheel cylinder fluid pressure Pm at a point n in Fig. 4, the rear wheel cylinder pressure Pr increases at a gradient equal to one, as shown by a line segment n-s in Fig. 4, in such a manner that the rear wheel cylinder fluid pressure Pr remains equal to the front wheel cylinder fluid pressure Pm. Thus, the braking force distribution characteristic in the loaded condition is established as shown by the line a-h-m-n-s in Fig. 4. By controlling the rear wheel cylinder fluid pressure Pr in accordance with this characteristic line, the bypass valve 4 prevents the rear wheel cylinder fluid pressure Pr from becoming too low with respect to the front wheel cylinder fluid pressure Pm, and avoids the danger of the front wheels' early locking.

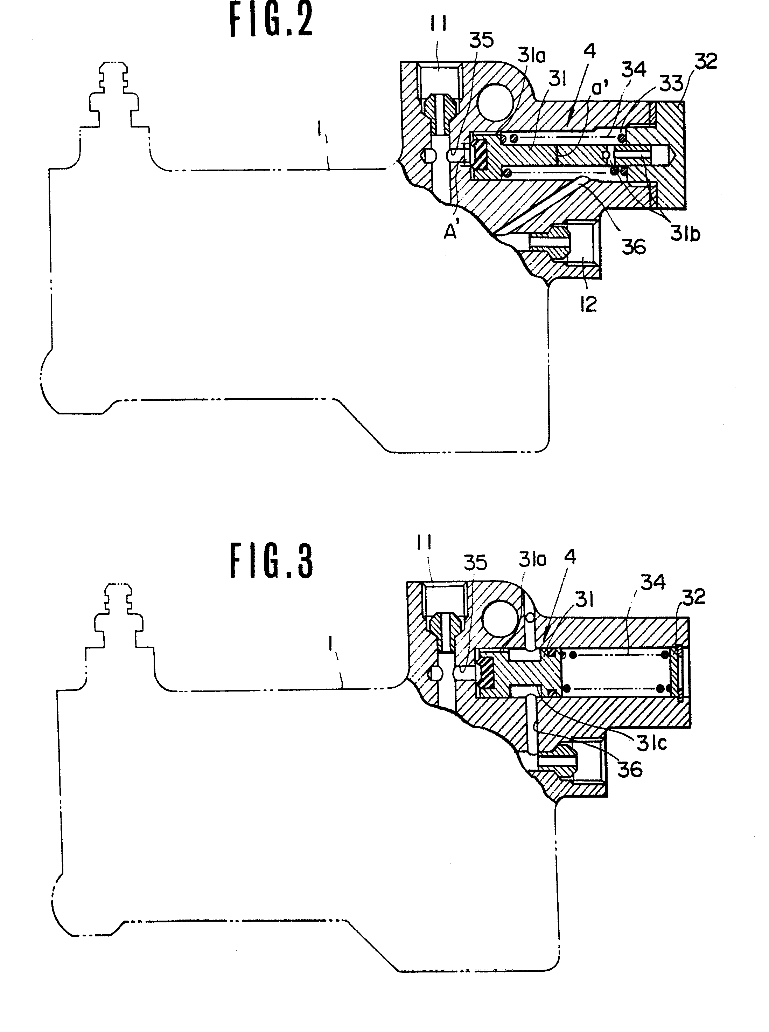

Fig. 2 shows another embodiment of the present invention. In this embodiment, the valve element 31 of the bypass valve 4 is formed with a hole 31b which opens in the right-hand end of the small diameter portion of the valve element 31 and communicates with the bypass chamber 33. In this case, the balance of the forces acting on the valve element 31 is expressed as follows:

$$Pm \cdot A' = Pr \, A' + F'$$

From this equation, the rear wheel cylinder fluid pressure Pr is given by

$$Pr = Pm - \frac{F'}{A'} \quad \dots\dots\dots\dots\dots\dots\dots \quad (5)$$

Thus, in the range where the master cylinder pressure Pm exceeds the above-mentioned predetermined value, the rear wheel cylinder fluid pressure Pr is controlled in accordance with the equation (5), as shown by a line segment o-p in Fig. 5, and the braking force distribution characteristic of the loaded condition is changed to a line a-h-o-p. The bypass valve 4 of this embodiment can prevent the rear wheel cylinder fluid pressure from becoming too low with respect to the front wheel cylinder fluid pressure as in the preceding embodiment.

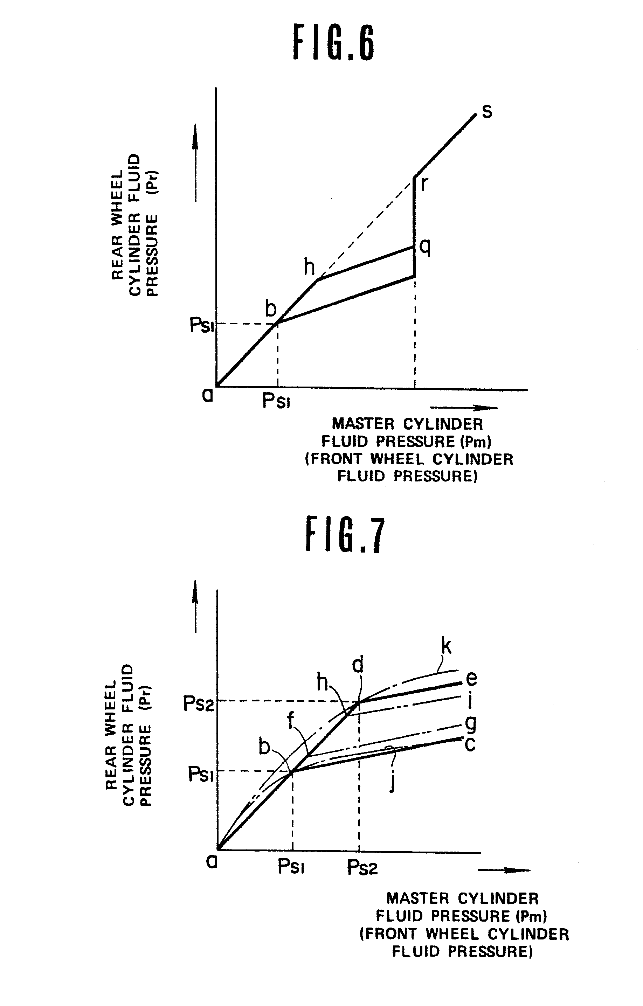

Fig. 3 shows still another embodiment of the present invention. In this embodiment, the valve element 31 does not have the small diameter portion. Instead, the valve element 31 is formed with an annular groove 31c on the outer periphery of the large diameter portion, and the annular groove 31c is connected with the outlet port 12 by the passage 36. In this case, when the master cylinder fluid pressure Pm exceeds the above-mentioned predetermined value, the valve element 31 is kept in its open position against the force of the spring 34. Therefore, the rear wheel cylinder fluid pressure Pr immediately becomes equal to the master cylinder fluid pressure Pm as shown by a line segment q-r in Fig. 6. After that, the rear wheel fluid pressure Pr increases in accordance with a line segment r-s in Fig. 6 in such a manner that the rear wheel cylinder fluid pressure Pr remains equal to the master cylinder fluid pressure Pm. Thus, the bypass valve 4 of this embodiment can prevent the rear wheel cylinder fluid pressure Pr from becoming too low with respect to the master cylinder fluid pressure Pm as in the preceding embodiments.

WHAT IS CLAIMED IS:

1.    A fluid pressure control valve assembly to be mounted on a vehicle, the assembly comprising:

control valve means (2) comprising an inlet port (11) through which an input fluid pressure is taken in, an outlet port (12) through which an output fluid pressure is put out, a spring (13), and a control valve member (5, 7) which is loaded by the spring and is movable against the spring in response to the input fluid pressure, said control valve member, when the input fluid pressure is equal to or higher than a first predetermined value which is determined by the spring, being in an operative position in which said control valve member controls the value of the output fluid pressure so that the output fluid pressure is equal to or lower than the input fluid pressure,

deceleration sensing valve means (3) comprising a fluid chamber (21) normally communicating with the inlet port of the control valve means by a fluid passage, a deceleration sensitive member (24) for sealing the fluid chamber when the deceleration of the vehicle reaches a predetermined magnitude, and a piston (20) whose axial position is determined by the fluid pressure in the fluid chamber and which is capable of compressing the spring of the control valve means to change the first predetermined value in accordance with the fluid pressure in the fluid chamber, and

bypass valve means (4) comprising a bypass valve member (31) which is movable in response to the input fluid pressure and is held, when the input fluid pressure is equal to or higher than a second predetermined value, in an operative state in which the bypass valve member controls the output fluid pressure in place of the control valve means.

2. A fluid pressure control valve assembly according to Claim 1, wherein, when the input fluid pressure is lower than the first predetermined value, said control valve member is in an inoperative position in which said control valve member allows the fluid to pass freely through the control valve means and keeps the output fluid pressure equal to the input fluid pressure, and wherein said bypass valve means further comprising a spring (34) for urging the bypass valve member and determining the second predetermined value, said bypass valve member in its operative state allowing the fluid to bypass the control valve means in a controlled manner while the bypass valve member is held in an inoperative state in which the bypass valve member prevents the fluid from bypassing the control valve means and has no influence on the control of the control valve means when the input fluid pressure is lower than the second predetermined value.

3. A fluid pressure control valve assembly according to Claim 2, wherein the second predetermined value is greater than the first predetermined value at least on the condition that the weight of the vehicle is constant, and wherein the valve assembly increases the output fluid pressure, as the input fluid pressure increases, so that the output fluid pressure is a monotone nondecreasing function of the input fluid pressure, the rate of increase of the output fluid pressure with respect to the input fluid pressure being equal to a first rate when the input fluid pressure is below the first predetermined value, a second rate when the input fluid pressure is between the first predetermined value and the second predetermined value, and a third rate when the input fluid pressure is beyond the second predetermined value, the second rate being smaller than the first rate and the third rate being greater than the second rate.

4. A fluid pressure control valve assembly according to Claim 3, wherein the third rate is greater than the first rate.

0096259

-27-

5.    A fluid pressure control valve assembly according to Claim 4, wherein said bypass valve member is urged by the spring of the bypass valve means in a first direction toward a closed position in which the bypass valve means is closed to prevent the fluid from bypassing the control valve means, said bypass valve member having a large surface area on which the input fluid pressure acts in a second direction opposite to the first direction and on which the output fluid pressure act in the first direction, and a small surface area which is smaller than the large surface area and on which the output fluid pressure act in second direction.

6.    A fluid pressure control valve assembly according to Claim 3, wherein the third rate is equal to the first rate.

7.    A fluid pressure control valve assembly according to Claim 6, wherein said bypass valve member is urged by the spring of the bypass valve means in a first direction toward a closed position in which the bypass valve means is closed to prevent the fluid from bypassing the control valve means, said bypass valve member having a surface area on which the input fluid pressure act in a second direction opposite to the first direction and on which the output fluid pressure act in the first direction.

8.  A fluid pressure control valve assembly according to Claim 3, wherein said bypass valve member in its operative state allows the fluid to bypass the control valve means freely.

9.  A fluid pressure control valve assembly according to Claim 3, wherein the second rate is greater than zero.

10.  A fluid pressure control valve assembly according to Claim 3, wherein the second rate is equal to zero.

11.  A fluid pressure control valve assembly according to Claim 3, wherein said deceleration sensitive valve further comprises an orifice disposed in the fluid passage.

FIG.1

FIG.2

11 35 31a 31 4 a' 34 33 32

A' 36 31b

12

FIG.3

11 35 31a 4 31 34 32

31c 36

# FIG.4

REAR WHEEL CYLINDER FLUID PRESSURE (Pr)

MASTER CYLINDER FLUID PRESSURE (Pm) (FRONT WHEEL CYLINDER FLUID PRESSURE)

# FIG.5

REAR WHEEL CYLINDER FLUID PRESSURE (Pr)

MASTER CYLINDER FLUID PRESSURE (Pm) (FRONT WHEEL CYLINDER FLUID PRESSURE)

# FIG.6

REAR WHEEL CYLINDER FLUID PRESSURE (Pr)

MASTER CYLINDER
FLUID PRESSURE (Pm)
(FRONT WHEEL CYLINDER
FLUID PRESSURE)

# FIG.7

REAR WHEEL CYLINDER FLUID PRESSURE (Pr)

MASTER CYLINDER
FLUID PRESSURE (Pm)
(FRONT WHEEL CYLINDER
FLUID PRESSURE)